Europäisches Patentamt

European Patent Office

Office européen des brevets

(11) Publication number: **0 187 635 B1**

# EUROPEAN PATENT SPECIFICATION

(45) Date of publication of patent specification: **07.08.91**

(51) Int. Cl.⁵: **G01F 23/28**, **B22D 11/10**, **H05B 6/34**

(21) Application number: **86100001.6**

(22) Date of filing: **02.01.86**

(54) **Device for level measurement in moulds for continuous casting.**

(30) Priority: **07.01.85 SE 8500053**

(43) Date of publication of application:
**16.07.86 Bulletin 86/29**

(45) Publication of the grant of the patent:
**07.08.91 Bulletin 91/32**

(84) Designated Contracting States:
**CH DE FR GB IT LI**

(56) References cited:
**EP-A- 0 063 072**
**FR-A- 1 444 645**
**US-A- 2 674 695**

(73) Proprietor: **ASEA AB**

**S-721 83 Västeras(SE)**

(72) Inventor: **Eriksson, Jan-Erik**
**Laborantgatan 6**
**S-260 34 Mörarp(SE)**
Inventor: **Thorn-Andersen, Ingvar**
**Birkagatan 165**
**S-252 60 Helsingborg(SE)**

(74) Representative: **Boecker, Joachim, Dr.-Ing.**
**Rathenauplatz 2-8**
**W-6000 Frankfurt a.M. 1(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a device for level measurement in moulds for continuous casting according to the precharacterising part of claim 1. Such a device is known from the EP-A-0 063 072.

Devices for level measurement of the abovementioned kind often comprise a source of radiation and a detector which are arranged in a mould with a stirrer for billets, blooms or slabs. EP-A-0 063 072 shows one type of such devices, in which a radioactive radiation source is positioned outside the mould with its stirrer radiating towards a detector on the radially opposite side of the mould. This device can be built up inter alia with a longitudinally extending radiation source and a detector of small volume. Both these items are arranged on roughly the same horizontal level and substantially above the upper level of the iron core of the stirrer. This forces to reduce the height of the stirrer below the melt level in the mould; where this is not tolerable, a second cut-out in the upper edge of the iron core will be necessary. To provide a penetration path for the slightly inclined rays which hit the iron core, one side of the stirrer is provided with an enlarged pole pitch/which allows the provision of a gap between adjacent coils. At this location a circumferencially relatively large cut-out is provided in the upper edge of the yoke of the iron core. The coils of the stirrer are thus disposed unsymmetrically around the mould resulting, with coils of given size, in an increased circumferencially dimension of the stirrer. Normally, a mould stirrer for, for example, billets with a round cross-section comprise a number of coils, for example six, which are symmetrically disposed in a toroidal or other configuration around the mould. The above-mentioned unsymmetrical coil location involves a complication and does not provide fully satisfactory possibilities of level measurement.

Preferably, the detector and/or the radiation source of the level measurement device should be positioned on the level of the meniscus (the highest point of the melt), which has so far presented a problem. It has been necessary to lower the height of the stirrer, which results in reduced efficiency of the stirring.

To solve the above-mentioned problems, proposals have been made to arrange, around the mould, a stirrer with toroidal or other coils; for that purpose recesses have been provided in coils in the form of apertures, bevels or the like to accommodate the detector and the radiation source of level measurement device. This has improved the possibilities of level measurement.

The invention aims at developing a device for level measurement in moulds for continuous casting of the above-mentioned kind which allows the coils to be disposed symmetrically around the mould and which avoids any reduction in the efficiency of the stirring.

To achieve this aim the invention suggests a device for level measurement according to the introductory part of claim 1, which is characterized by the features of the characterizing part of claim 1.

A further development of the invention are characterized by the features of claim 2.

In the present invention a linear transmitter/radiation source and a small, suitably dot-shaped receiver are used. By "iron pole" in this description is meant that part of the iron core of the stirrer which carries a coil or parts of several coils along with that portion of the yoke of the iron core that extends radially outwardly from the first-mentioned part of the iron core. By placing the detector and the radiation source at mutually different heights in relation to the melt surface in the mould, the length of the radiation source can be reduced.

By providing a slot in the iron core where the rays pass, losses in radiation intensity are avoided. Slots are arranged in iron poles, and in this way the same coil pitch for the stirrer coils (coil-wound or overlapping-wound) arranged around the mould periphery can be retained. Thus, it is possible to use an elongated radiation source and a simple dot-shaped detector.

The invention will now be described in greater detail with reference to the accompanying drawings showing - by way of example - in

Figure 1    a cast strand in a mould surrounded by a stirrer equipped with a measuring device according to the invention,

Figure 2    an example for the possible location of a measuring slot in the iron core of a stirrer with separate poles carrying coil-wound coils,

Figure 3    an example for the possible location of a measuring slot in the iron core of a stirrer having a slotted armature.

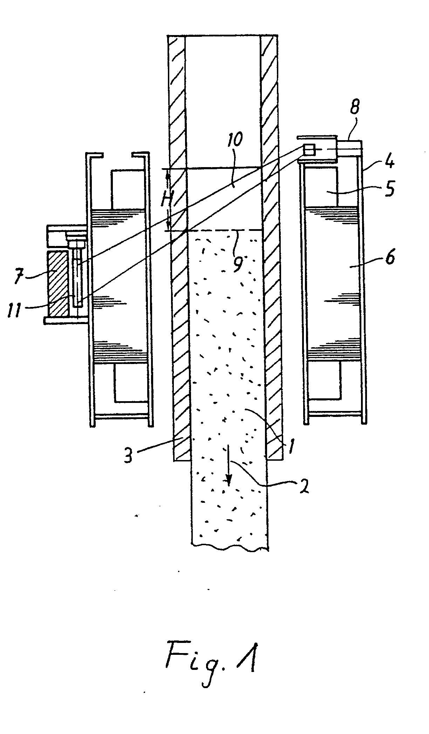

Figure 1 shows a cast strand 1 with its direction of travel (casting direction) indicated by the arrow 2. The casting takes place in a mould 3 with a surrounding stirrer 4, comprising one or several copper coils 5 and an iron core 6. A radiation source, in this case a radioactive radiation source 11, is arranged inside a possible outer casing of the stirrer, but radially outside of the iron core of the stirrer and is shielded towards the outside by a protective lead layer 7. As is clear from Figure 1, the radiation source is radiation source located below the upper level of said iron core. The radiation passes through a slot in iron pole and

through the cast strand towards a detector 8, located at a level above the melt surface 9 and above the upper level of the iron core (6) of the stirrer different from the location level of the radiation source 11. By locating the radiation source 11 and the detector 8 at different levels, the length of the radiation source can be limited and changes in height be easily indicated (see at H, which thus indicates the adjustable melt level). A slot, through which the radiation 10 is allowed to pass, is thus provided in a pole of the iron core 6, that is, that part of the iron core which carries the coil. The pole with said slot is located in the vicinity of the radiation source. By placing the detector and the radiation source at different heights, also the need for slotting of the iron core is reduced. If these two elements were to be positioned at the same height, the length of the radiation source would have to be made greater to indicate level changes (H).

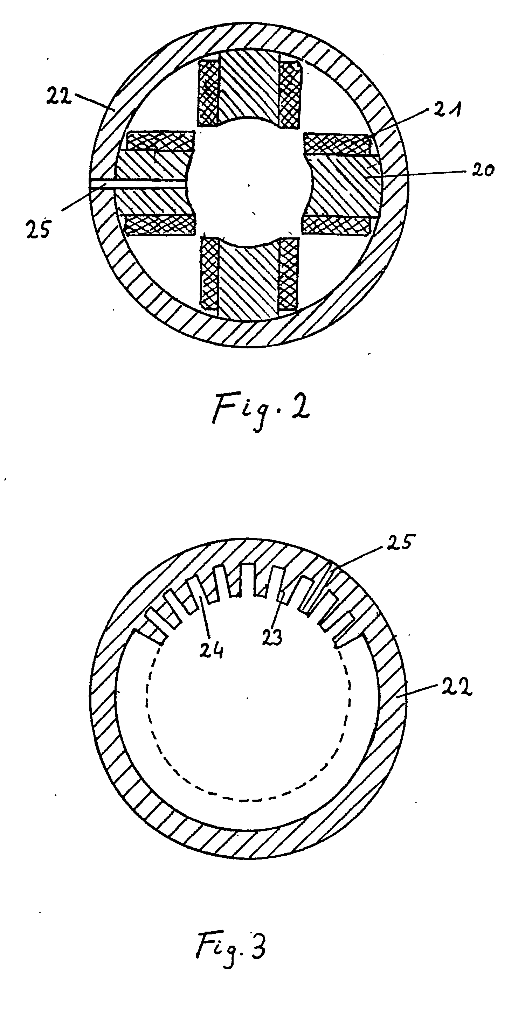

Figure 2 shows by way of example and schematically in cross-section the iron core of the stirrer with four separate poles 20 carrying coils 21. A measuring slot 25 penetrates the iron of the coil-carrying pole 20 and the radially outwardly extending portion of the yoke 22. In the same manner as Figure 2, Figure 3 shows a stirrer with an iron core of the slotted armature type. The iron core is provided with a circular slotted inner portion consisting of teeth 23 and slots 24, the latter accommodating the windings (not shown) in an overlapping pattern. The measuring slot 25 penetrates in this case the iron of a tooth and the radially extending portion of the yoke. Those portions of the core being penetrated by the slot 25 in Figure 2 and 3 are termed "iron pole" in this description.

The means according to the above may be varied in many ways within the scope of the following claims.

## Claims

1. Device for level measurement in moulds for continuous casting, comprising a stirrer (4) with stirrer coils (5) disposed around the circumference of the stirrer, with at least one elongated radiation source (11) extending in the casting direction and arranged outside the stirrer (4), with a detector (8) with a small extension in the casting direction arranged substantially diametrically on the opposite side of the mould/stirrer (3, 4), and with an oblong slot in the iron core for the passage of rays from the radiation source, **characterized** in that the radiation source (11) is located in front of the outer side wall of the iron core (6) of the stirrer below the upper level of said iron core, that the detector (8) is located above the upper level of the iron core (6) of the stirrer, and that said oblong slot (25) for the passage of rays (10) from the radiation source is arranged in the vicinity of the radiation source and extends through the iron pole for a coil.

2. Device according to claim 1, **characterized** in that the radiation source (11) is radioactive and that the radiation path runs at the side of the copper mould in the stirrer.

## Revendications

1. Dispositif de mesure du niveau dans des lingotières de coulée continue, comprenant un dispositif de brassage (4) ayant des bobines de brassage (5) disposées autour de la circonférence du dispositif de brassage, au moins une source oblongue de rayonnement (11) s'étendant dans la direction de coulée et disposée à l'extérieur du dispositif de brassage (4), un détecteur (8) ayant une petite étendue dans la direction de coulée et disposé du côté de la lingotière/dispositif de brassage (3, 4) sensiblement diamétralement opposé, et une fente oblongue ménagée dans le noyau de fer et destinée au passage des rayons provenant de la source de rayonnement, caractérisé en ce que la source de rayonnement (11) est disposée en face de la paroi latérale extérieure du noyau de fer (6) du dispositif de brassage, endessous du niveau supérieur du noyau de fer, en ce que le détecteur (8) est disposé audessus du niveau supérieur du noyau de fer (6) du dispositif de brassage, et en ce que la fente oblongue (25), destinée au passage des rayons (10), provenant de la source de rayonnement, est disposée à proximité de la source de rayonnement et passe à travers le pôle de fer d'une bobine.

2. Dispositif suivant la revendication 1, caractérisé en ce que la source de rayonnement (11) est radioactive et en ce que le trajet de rayonnement passe sur le côté de la lingotière en cuivre, dans le dispositif de brassage.

## Patentansprüche

1. Vorrichtung zur Messung des Pegels in Stranggießkokillen mit einem Rührer (4), der mit Rührspulen (5) ausgerüstet ist, die längs des Umfanges des Rührers verteilt sind, mit mindestens einer langgestreckten Strahlungsquelle (11), die sich in Gießrichtung erstreckt und außerhalb des Rührers (4) angeordnet ist, mit einem Detektor (5), der sich nur über eine kurze Strecke in Gießrichtung erstreckt und im wesentlichen diametral auf der gegenüberliegenden Seite der Kokiille/des Rührers (3,4) angeordnet ist, und mit einem schrägen Schlitz im Eisenkern für den Durchtritt der Strahlen einer Strahlungsquelle, **dadurch gekennzeichnet**, daß die Strahlungsquelle (11) vor der äußeren Wand des Eisenkernes (6) des Rührers unterhalb der oberen Begrenzung des Eisenkernes angeordnet ist, daß der Detektor (8) oberhalb der oberen Begrenzung des Eisenkernes (6) des Rührers angeordnet ist und daß der genannte schräge Schlitz (25) für den Durchtritt der Strahlen (10) der Strahlungsquelle zu der Strahlungsquelle benachbart angeordnet ist und sich durch den Eisenpol einer Spule erstreckt.

2. Vorrichtung nach Anspruch 1, **dadurch gekennzeichnet**, daß die Strahlungsquelle (11) radioaktiv ist und daß der Strahlungspfad sich an der Seite der Kupferkokille im Rührer erstreckt.

Fig. 1

Fig. 2

Fig. 3